Europäisches Patentamt

European Patent Office

Office européen des brevets

(19)

(11) EP 0 486 387 B1

(12) # FASCICULE DE BREVET EUROPEEN

(45) Date de publication et mention
de la délivrance du brevet:
**07.02.1996 Bulletin 1996/06**

(51) Int Cl.[6]: **G02F 1/153**, G02F 1/155

(21) Numéro de dépôt: **91403045.7**

(22) Date de dépôt: **14.11.1991**

(54) **Vitrage électrochrome**

Elektrochromes Fenster

Electrochromic window

(84) Etats contractants désignés:
**AT BE CH DE DK ES FR GB GR IT LI LU NL SE**

(30) Priorité: **14.11.1990 FR 9014134**
**27.06.1991 FR 9107932**

(43) Date de publication de la demande:
**20.05.1992 Bulletin 1992/21**

(73) Titulaire: **SAINT-GOBAIN VITRAGE**
**F-92400 Courbevoie (FR)**

(72) Inventeurs:
- **Perrodo, Franck**
  **F-75010 Paris (FR)**
- **Thomas, Gilles**
  **F-91190 Gif sur Yvette (FR)**

- **Boulanger, Frank**
  **F-92410 Ville d'Avray (FR)**
- **Lerbet, François**
  **F-75010 Paris (FR)**
- **Papret, Corinne**
  **F-91000 Evry (FR)**

(74) Mandataire: **Renous Chan, Véronique et al**
**F-93300 Aubervilliers (FR)**

(56) Documents cités:
EP-A- 0 001 955          FR-A- 2 441 194
US-A- 4 182 551

- PATENT ABSTRACTS OF JAPAN, vol. 6, no. 188 (P-144)(1066) 28 Septembre 1982 & JP-A-57 100 414
- PATENT ABSTRACTS OF JAPAN, vol. 11, no. 69 (C-407) 3 Mars 1987 & JP-A-61 227 946
- PATENT ABSTRACTS OF JAPAN, vol. 14, no. 8 (P-987) 10 Janvier 1990 & JP-A-1 257 920

# Description

La présente invention concerne les vitrages à transmission électrocommandée ou autrement dit les vitrages électrochromes dont l'état de coloration peut être modifié par passage d'un courant électrique. L'invention s'applique plus particulièrement au contrôle de l'apport solaire dans les bâtiments ou les habitacles des véhicules automobiles.

Les vitrages électrochromes faisant l'objet de l'invention sont des vitrages comportant une couche d'un matériau susceptible d'insérer de façon réversible des cations, en général des protons ou des ions lithium, et dont les états d'oxydation correspondant aux deux états inséré ou désinséré présentent des états de coloration différents. Dans le cas du trioxyde de tungstène, on passe ainsi d'un état oxydé incolore à un état réduit de coloration bleu-nuit, selon la réaction chimique :

$$WO_3 + x\, M^+ + xe^- \; \texttt{<-----}> \; M_x WO_3.$$

Pour que cette réaction se produise, il est donc nécessaire de disposer à côté de la couche de matériau électrochrome d'une source de cations et d'une source d'électrons, respectivement constituées par une couche d'un électrolyte à conductivité ionique et par une couche électroconductrice servant d'électrode. A ce premier système comportant un matériau électrochrome cathodique vient s'ajouter par symétrie un système avec un matériau électrochrome anodique, tel que l'oxyde d'iridium, capable de même d'insérer et de désinsérer des cations d'une manière réversible, la couche d'oxyde d'iridium étant insérée entre la couche d'électrolyte et une seconde couche électroconductrice transparente.

Dans les demandes de brevet européen EP-A-253 713 et EP-A-338 876, il a été montré la relation existant entre la taille d'un système électrochrome et la conductivité électrique requise pour l'électrode. Plus les dimensions du vitrage sont grandes et plus la couche électroconductrice transparente doit présenter une faible résistivité faute de quoi les temps de commutation s'allongent. Pour des vitrages de plus de 200 cm , il est ainsi recommandé une résistance carrée inférieure à 5 Ohms.

Un tel niveau de performance ne peut certes pas être obtenu avec tout type de couches minces, d'autant que l'autre exigence fondamentale est le caractère transparent, une transmission lumineuse aussi élevée que possible étant recherchée pour l'état décoloré ce qui implique avec nombre de matériaux des épaisseurs relativement faibles.

A cette double exigence d'un niveau de performances élevé pour la conductivité électrique et la transparence s'ajoute dans le cas de vitrages typiquement destinés aux applications automobiles, notamment toits ouvrants, la compatibilité avec un traitement thermique de la feuille de verre du type bombage et/ou trempe thermique. Cette compatibilité peut être obtenue avec une couche dite bombable, c'est-à-dire susceptible de supporter sans dégradation un traitement à 600°C ou avec une couche pouvant être déposée sur un substrat froid, le réchauffage du verre risquant de lui faire perdre sa forme et les effets bénéfiques de la trempe thermique éventuelle. Enfin, la technologie mise en oeuvre doit être adaptée aux dimensions des vitrages et à une production industrielle, notamment en termes de coût et de rendement.

Dans l'état actuel des connaissances en matière de couches électroconductrices, il apparaît que seules conviennent raisonnablement les couches à base d'oxydes métalliques dopés, et plus particulièrement les couches d'oxyde d'indium dopé à l'étain (ITO). Les systèmes électrochromes proposés sont donc typiquement des empilements Verre/ITO/$WO_3$ (ou autre matériau électrochrome cathodique)/Electrolyte/$Ir_2O_3$ (ou autre matériau électrochrome anodique)/ITO/Verre.

Dans de tels systèmes, il a été toutefois constaté des problèmes liés à des interactions entre les couches électroconductrices et l'électrolyte ou plus exactement les cations que celui-ci fournit. Un tel phénomène peut paraître surprenant dans la mesure où la couche électroconductrice transparente n'est pas directement en contact avec l'électrolyte mais en est séparée par une couche d'un matériau électrochrome. Néanmoins, cette couche intercalaire ne peut entièrement jouer un rôle de protection car elle se doit de proposer un nombre de sites réactifs pour les cations aussi grand que possible, donc avec une répartition sur toute l'épaisseur de la couche de matériau électrochrome ce qui sous entend une couche relativement poreuse dans laquelle les cations vont pénétrer ce qui leur permet d'atteindre ainsi la couche électroconductrice transparente.

Dans le cas des systèmes protoniques, basés sur l'insertion réversible de protons, la dégradation du système semble liée à un mécanisme de corrosion lente due à des réactions acido-basiques, ceci même si l'électrolyte est choisi d'un type réputé peu agressif comme par exemple un complexe solide acide-polymère organique. Dans la suite de ce mémoire, nous nous limiterons de toute façon aux systèmes électrochromes n'utilisant pas des solutions acides liquides, dont le caractère agressif nuit à toutes les couches du système et notamment aux couches de matériau électrochrome. A noter qu'il a été proposé de substituer à ces matériaux polymères des matériaux tels que des diélectriques, mais ceux-ci doivent être déposés en des couches extrêmement minces, faute de quoi leur propre coloration devient gênante, ce qui entraîne notamment des risques de courts-circuits dans le cas des systèmes de grandes dimensions. De toute façon, les cations doivent être présents dans le système et ces matériaux de substitution ne permettent au mieux que de réduire le nombre de ceux-ci.

Dans le cas des systèmes basés sur l'insertion réversible d'ions lithium, ce problème des réactions acide/base n'existe a priori plus, aussi pouvait-on s'attendre à une plus grande longévité des systèmes. Or, on observe un vieillissement des électrodes formées d'oxyde d'indium dopé, ces électrodes se colorant petit à petit en brun. Les travaux de divers auteurs ont montré que cette coloration est probablement due à un phénomène d'électrochromisme cathodique de l'oxyde d'indium, mais à la différence des matériaux électrochromes "vrais", ce phénomène n'est pas totalement réversible, de sorte que la coloration persiste.

Il faut bien noter que ce phénomène de corrosion est relativement lent et que le système fonctionne normalement pendant un certain temps. Mais après une longue durée d'utilisation ou une simulation de celle-ci par des tests de vieillissements accélérés à haute température, on constate une dégradation sensible par exemple après 5 heures à 100°C ou plus. Cette corrosion est donc un handicap au développement de ces systèmes notamment dans les applications bâtiments confrontées au problème de la garantie décennale et dans les applications automobiles où les températures d'utilisation sont parfois très élevées.

L'invention a pour but un nouveau type de vitrage électrochrome qui ne présente pas ce phénomène de dégradation des couches électroconductrices.

Ce problème est résolu par l'interposition, entre les couches de matériau électrochrome et les couches électroconductrices, d'une couche barrière. L'invention a ainsi pour premier objet un vitrage électrochrome comportant successivement une feuille de verre, une première électrode constituée par une couche électroconductrice transparente dont la résistance carrée est inférieure à 5 Ohms, une couche barrière, une couche d'un matériau électrochrome cathodique, un électrolyte, une couche d'un matériau électrochrome anodique, et une seconde couche barrière à une seconde électrode électroconductrice transparente. L'épaisseur des couches barrières est choisie afin d'être égale à au moins 100 nanomètres et à rester inférieure à 600 nanomètres. La résistance carrée de l'ensemble formé par une électrode et sa couche barrière est alors inférieure à 5 Ohms.

La couche barrière selon l'invention est donc constitutive de l'ensemble formant l'électrode et s'oppose en cela au système décrit par M. Stuart F Cogan et R David Rauth dans l'article intitulé "The a-WO$_3$/IrO$_2$ électrochromic system" publié par le SPIE Institutes for advanced Optical Technologies (volume IS4), système dans lequel il est préconisé à l'interface électrolyte-matériau électrochrome, la présence d'une couche barrière du type diélectrique ce qui revient à encadrer l'électrolyte le plus corrosif (le polymère acide) par un autre électrolyte. La couche barrière décrite dans l'article précité ne peut pas protéger l'électrode transparente contre l'action des protons car ces derniers doivent bien atteindre la couche de matériau électrochrome pour que le phénomène d'électrochromisme se produise. En revanche, située à l'arrière des couches de matériaux électrochromes, la couche barrière selon l'invention peut être "étanche" aux protons, ou du moins être aussi étanche que possible.

Une couche donnée peut être utilisée comme couche barrière selon l'invention lorsque le rapport entre son épaisseur et sa porosité est grand. En pratique, il n'est toutefois pas souhaitable de trop augmenter son épaisseur car alors l'absorption optique liée à la couche barrière devient gênante et de plus la tenue mécanique du système est dégradée avec une plus grande propension au délaminage. De ce fait, il est préférable de travailler avec des couches de moins de 600 nanomètres. D'autre part, il est avantageux d'opérer dans des conditions de dépôt qui conduisent à des densités élevées c'est à dire au sens de l'invention relativement proches de la densité théorique du réseau cristallin correspondant.

Par ailleurs, il apparaît souhaitable que cette couche barrière soit réalisée dans un matériau autre que l'oxyde d'indium. En effet il est apparu, notamment dans les systèmes basés sur l'insertion de lithium, qu'une densification de la couche d'oxyde d'indium - dans toute son épaisseur ou seulement en surface - n'est pas une solution au problème posé, car même si une densité élevée limite effectivement la pénétration des ions lithium dans l'électrode, elle ne permet pas d'éviter toute interaction à la surface de l'électrode en contact avec la couche de matériau électrochrome, interaction qui se traduit à nouveau par l'apparition d'une légère coloration brune et d'une diminution du contraste.

Même si la couche barrière fait partie de l'ensemble formant l'électrode, elle n'a pas besoin d'être très électroconductrice. Ce point, qui apparaît au prime abord assez paradoxal vu les qualités exigées pour les électrodes, est dû au fait que la couche barrière est de préférence déposée selon une couche très mince, inférieure à 600 nanomètres, et que dans l'épaisseur, son caractère isolant sera toujours dans ces conditions insuffisant pour limiter effectivement la conduction électronique, ceci bien sûr sous réserve que la densité électronique à l'arrière de la couche barrière soit aussi homogène que possible ce qui suppose une couche électro-conductrice transparente de base très conductrice.

La couche barrière doit être aussi stable que possible à l'égard des électrolytes ce qui implique notamment dans le cas des systèmes protoniques une bonne résistance aux attaques acides. Nous avons indiqué précédemment que son épaisseur doit rester faible, notamment afin de ne pas nuire à la transparence de l'électrode, mais néanmoins elle doit être suffisante pour l'obtention d'une imperméabilité aux cations suffisante.

Il a été trouvé que le dioxyde d'étain SnO$_2$ , éventuellement légèrement dopé à l'antimoine, déposé sans précautions particulières convient tout particulièrement bien à la réalisation de telles couches barrières, des épaisseurs de 100 à 500 nanomètres donnant toute satisfaction.

Des résultats très satisfaisants ont également été obtenus avec une couche barrière formée d'oxyde de tungstène dense, présentant une densité supérieure ou égale à 95 % de la densité maximale théorique. A noter qu'une telle couche d'oxyde de tungstène ne peut pratiquement plus présenter de phénomène d'électrochromisme car les protons ne peuvent atteindre les sites réactifs.

Selon un autre exemple, le phénomène de dégradation des couches électroconductrices est évité en choisissant pour celles-ci des couches d'oxyde d'étain dopées au fluor, déposées selon des techniques du type pyrolyse en phase vapeur avec des épaisseurs de l'ordre de 800 à 900 nanomètres.

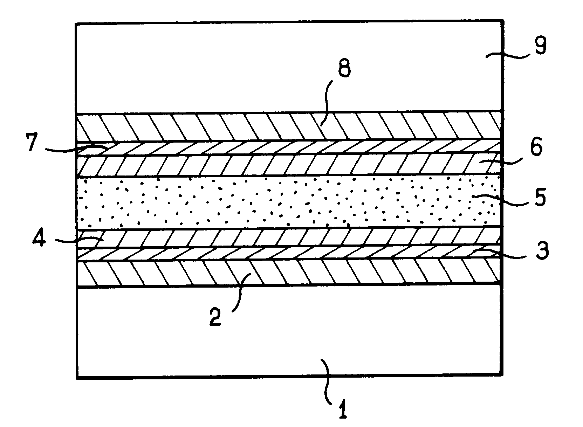

D'autres détails et caractéristiques avantageuses de l'invention sont données ci-après en référence à la planche unique annexée où figure un vitrage électrochrome selon l'invention, vu dans une représentation schématique où, par souci d'un maximun de clarté, on a écarté tout objectif de respect de proportionnalité des différentes couches.

Le système électrochrome est constitué par une feuille de verre 1 revêtue d'une couche électroconductrice transparente 2 formant la première électrode. La feuille de verre 1 fait face à une seconde feuille de verre qui est de même revêtue d'une couche électroconductrice transparente 8. Ces deux électrodes sont reliées à un générateur de tension ici non représenté.

Ces électrodes sont par exemple formées par des couches d'oxyde d'indium dopé à l'étain déposées par pulvérisation cathodique magnétron, selon une épaisseur de 400 nm et ont une résistance carrée de l'ordre de 5 Ohms.

Dans le cas d'un système protonique, l'électrolyte peut être avantageusement formé par une solution solide d'acide phosphorique anhydre dans du polyoxyde d'éthylène, préparée de la manière suivante : dans des conditions rigoureusement anhydres, on dissout par litre de solvant 20 g d'acide phosphorique normapur et 20 g de polyoxyde d'éthylène de masse moléculaire égale à 5000000 (densité 1,21, température de transition vitreuse -40°C, rapport O/H du nombre d'atomes d'oxygène du polymère sur le nombre d'atomes d'hydrogène de l'acide égal à 0,66). Le solvant utilisé est un mélange 50-50 d'acétonitrile et de tétrahydro-furanne. La solution est coulée sur une plaque de verre après dépôt d'une couche de matériau électrochrome (voir ci-après). L'épaisseur uniforme est obtenue par la méthode du tire-film. La coulée est effectuée sous une atmosphère à taux d'humidité contrôlé. Après évaporation du solvant, on obtient un film de 50 micromètres dont la conductivité à 20°C est de $2\ 10^{-5}\ Ohm^{-1}\ cm^{-1}$ et dont la transmission lumineuse est supérieure à 85%. Le taux d'humidité au moment de la coulée doit être de préférence compris entre 40 et 100 ppm ce qui permet d'obtenir ultérieurement un contraste optimal.

Dans le cas d'un système au lithium, cet électrolyte peut être formé de façon similaire par un polymère conducteur au lithium, notamment un polymère du type enseigné dans le brevet FR-A-2 642 890.

L'électrolyte 5 est entouré par deux couches de matériaux électrochromes, un matériau cathodique, l'oxyde de tungstène 4, déposé par pulvérisation cathodique magnétron sur une épaisseur de 260 nm et un matériau anodique.

Pour les systèmes protoniques, le matériau électrochrome anodique choisi est de l'oxyde d'iridium 6 déposé par pulvérisation cathodique magnétron (avec un mélange gazeux oxygène-hydrogène dans un rapport 80/20 lors du dépôt conformément aux enseignements de EP-A-338 876), sur une épaisseur de 55 nanomètres.

Pour les systèmes au lithium, ce matériau électrochrome anodique choisi est de l'oxyde de nickel 6 déposé de même par pulvérisation cathodique magnétron à partir d'une cible métallique avec un mélange gazeux oxygène-hydrogène dans un rapport 80/20 lors du dépôt conformément aux enseignements de EP-A-373 020), sur une épaisseur de 100 nanomètres.

Après assemblage sous autoclave des deux systèmes décrits ci-dessus, sans couche barrière, après quelques heures à 100°C on commence à observer une baisse des performances du système, notamment due à une dégradation optique des couches. Dans le système protonique, il semble que les couches d'oxyde d'indium dopé à l'étain se dissolvent dans le polymère ce qui finalement conduit à la perte totale de fonctionnalité du système. Dans le système au lithium, les couches d'oxyde d'indium dopé à l'étain brunissent et la coloration du système devient permanente.

Si maintenant on interpose entre les électrodes 2 et 8 et les couches de matériau électrochromes 4 et 6 deux couches barrières 5 et 7, constituées par de l'oxyde d'étain déposé par pulvérisation cathodique magnétron selon une épaisseur de par exemple 300 nanomètres, on n'observe plus de dégradation de la résistivité des électrodes après 100 heures à 100°C ce qui indique bien que les électrodes d'ITO ont été totalement protégées.

## Revendications

1. Vitrage électrochrome comportant successivement une feuille de verre (1), une première électrode (2) constituée par une couche électroconductrice transparente dont la résistance carrée est inférieure à 5 Ohms, une couche (4) d'un matériau électrochrome cathodique, un électrolyte (5), une couche (6) d'un matériau électrochrome anodique et une seconde électrode (8) électroconductrice transparente, **caractérisé par** des couches barrières vis-à-vis des ions (3,7) insérées entre lesdites électrodes et lesdites couches de matériaux électrochromes et dont l'épaisseur est d'au moins 100 nanomètres et inférieure à 600 nanomètres.

2. Vitrage électrochrome selon la revendication 1, **caractérisé en ce que** les couches barrières (3, 7) ont une résistance carrée supérieure à 20 Ohms.

3. Vitrage électrochrome selon l'une des revendications 1 ou 2, **caractérisé en ce que** les couches barrières (3, 7) à base d'oxyde ont une densité élevée et proche de la densité théorique du réseau cristallin.

4. Vitrage électrochrome selon l'une des revendications précédentes, **caractérisé en ce que** les couches barrières (3, 7) sont formées par des couches à base d'oxyde d'étain.

5. Vitrage électrochrome selon la revendication 4, **caractérisé en ce que** les couches d'étain sont dopées à l'antimoine.

6. Vitrage électrochrome selon l'une des revendications précédentes, **caractérisé en ce que** l'épaisseur des couches barrières est comprise entre 100 et 500 nanomètres.

7. Vitrage électrochrome selon l'une des revendications 1 à 3, **caractérisé en ce que** les couches barrières sont constituées par des couches d'oxyde de tungstène dont la densité est supérieure ou égale à 95 % de la densité d'un cristal pur d'oxyde de tungstène.

8. Vitrage selon l'une des revendications précédentes, **caractérisé en ce que** les électrodes électroconductrices (2, 8) sont à base d'oxyde d'indium dopé à l'étain.

9. Vitrage selon l'une des revendications précédentes, **caractérisé en ce que** l'électrolyte (5) est un électrolyte conducteur protonique.

10. Vitrage selon l'une des revendications 1 à 8, **caractérisé en ce que** l'électrolyte (5) est un électrolyte conducteur au lithium.

## Claims

1. Electrochromic glazing successively incorporating a glass sheet (1), a first electrode (2) constituted by a transparent electroconductive layer whose square resistance is below 5 Ohms, a cathodic electrochromic material layer (4), an electrolyte (5), an anodic electrochromic material layer (6) and a second transparent electroconductive electrode (8), characterized by barrier layers with respect to ions (3, 7) inserted between the said electrodes and the said electrochromic material layers and whose thickness is at least 100 nm and below 600 nm.

2. Electrochromic glazing according to claim 1, characterized in that the said barrier layers (3, 7) have a square resistance exceeding 20 Ohms.

3. Electrochromic glazing according to either of the claims 1 and 2, characterized in that said oxide-based barrier layers (3, 7) have a high density, close to the theoretical density of the crystal lattice.

4. Electrochromic glazing according to any one of the preceding claims, characterized in that said barrier layers (3, 7) are formed by tin oxide layers.

5. Electrochromic glazing according to claim 4, characterized in that said tin layers are doped with antimony.

6. Electrochromic glazing according to any one of the preceding claims, characterized in that the thickness of said barrier layer is between 100 and 500 nanometers.

7. Electrochromic glazing according to any one of the claims 1 to 3, characterized in that said barrier layer is constituted by a tungsten oxide layer, whose density is equal to or greater than 95% of the density of a pure tungsten oxide crystal.

8. Glazing according to any one of the preceding claims, characterized in that the electroconductive electrodes (2, 8) are based on tin-doped indium oxide.

9. Glazing according to any one of the preceding claims, characterized in that the electrolyte (5) is a protonic conductive electrolyte.

10. Glazing according to any one of the claims 1 to 8, characterized in that the electrolyte (5) is a lithium conducting electrolyte.

## Patentansprüche

1. Elektrochrome Verglasung, umfassend aufeinander folgend eine Glasscheibe (1), eine erste Elektrode (2), die aus einer durchsichtigen elektrisch leitfähigen Schicht besteht, deren Widerstand pro Flächenquadrat weniger als 5 Ohm beträgt, eine Schicht (4) aus einem kathodischen elektrochromen Material, einen Elektrolyten (5), eine Schicht (6) aus einem anodischen elektrochromen Material und eine zweite durchsichtige elektrisch leitfähige Elektrode (8), **dadurch gekennzeichnet, daß** zwischen den Elektroden und den Schichten aus elektrochromem Material Ionensperrschichten (3, 7) eingelagert sind, deren Dicke wenigstens 100 Nanometer und weniger als 600 Nanometer beträgt.

2. Elektrochrome Verglasung nach Anspruch 1, **dadurch gekennzeichnet, daß** die Sperrschichten (3, 7) einen Widerstand pro Flächenquadrat von über 20 Ohm besitzen.

3. Elektrochrome Verglasung nach Anspruch 1 oder 2, **dadurch gekennzeichnet, daß** die Sperrschichten (3, 7) ein Oxid zur Grundlage und eine hohe Dichte haben, die fast die theoretische Dichte des Kristallgitters erreicht.

4. Elektrochrome Verglasung nach einem der vorhergehenden Ansprüche, **dadurch gekennzeichent, daß** die Sperrschichten (3, 7) aus Schichten auf der Grundlage von Zinnoxid gebildet sind.

5. Elektrochrome Verglasung nach Anspruch 4, **dadurch gekennzichent, daß** die Zinnschichten mit Antimon dotiert sind.

6. Elektrochrome Verglasung nach einem der vorhergehenden Ansprüche, **dadurch gekennzeichnet, daß** die Dicke der Sperrschichten 100 bis 500 Nanometer beträgt.

7. Elektrochrome Verglasung nach einem der Ansprüche 1 bis 3, **dadurch gekennzeichnet, daß** die Sperrschichten aus Wolframoxidschichten bestehen, deren Dichte wenigstens 95 % der Dichte eines reinen Wolframoxidkristalls beträgt.

8. Verglasung nach einem der vorhergehenden Ansprüche, **dadurch gekennzeichnet, daß** die elektrisch leitfähigen Elektroden (2, 8) mit Zinn dotiertes Indiumoxid als Grundlage haben.

9. Verglasung nach einem der vorhergehenden Ansprüche, **dadurch gekennzeichnet, daß** der Elektrolyt (5) ein Protonen leitender Elektrolyt ist.

10. Verglasung nach einem der Ansprüche 1 bis 8, **dadurch gekennzeichnet, daß** der Elektrolyt (5) ein Lithium leitender Elektrolyt ist.